# EUROPÄISCHE PATENTSCHRIFT

(11) **EP 2 384 940 B1**
(45) Veröffentlichungstag und Bekanntmachung des Hinweises auf die Patenterteilung: **27.11.2013**
(21) Anmeldenummer: 11075182.3
(22) Anmeldetag: 24.02.2009
(51) Int. Cl.: B60R 21/21

(54) **Innenverkleidungsteil**
Interior cladding part
Elément d'habillage intérieur

(30) Priorität: 25.02.2008 DE 102008011519
(43) Veröffentlichungstag der Anmeldung: 09.11.2011
(62) Teilanmeldung aus: 09714022.2
(73) Patentinhaber: Faurecia Innenraum Systeme GmbH, 76767 Hagenbach (DE)
(72) Erfinder: Bühler, Wolfram, 76227 Karlsruhe (DE)
(74) Vertreter: Pfenning, Meinig & Partner GbR

(56) Entgegenhaltungen:
- DE-A1- 10 055 546
- DE-A1- 10 246 338
- DE-A1- 19 651 758
- DE-C1- 19 718 931
- JP-A- 5 162 603

## Beschreibung

Die Erfindung betrifft ein Innenverkleidungsteil zur Abdeckung eines Airbags, also eines Gassacks eines Rückhaltesystems für Fahrzeuginsassen.

Die nach dem Stand der Technik bekannten Ausführungsformen entsprechende Innenverkleidungsteile sind mit Nachteilen verbunden, die insbesondere daher rühren, dass je nach Szenario eines Unfalls bzw. der Airbagauslösung das Innenverkleidungsteil mit einer von Fall zu Fall sehr unterschiedlichen Wucht vom Airbag getroffen werden kann. Dies ist naheliegenderweise der Fall bei zwei- oder mehrstufigen Airbagsystemen, bei denen bei leichten Unfällen eine Auslösung nur einer Stufe oder nicht aller Stufen vorgesehen ist und eine Zeitverzögerung bis zu einer Auslösung einer weitere Stufe vom Szenario abhängig ist. Verursacht sein können sehr große Unterschiede zwischen verschiedenen möglichen Öffnungsstößen, aber auch durch eine unter Umständen beträchtliche Temperaturabhängigkeit von Eigenschaften einer beispielsweise pyrotechnischen Füllungsvorrichtung. Nun ist das Innenverkleidungsteil mit Bereich der Durchtrittsöffnung auf jeden Fall hinreichend schwach auszuführen, um ein sicheres Aufbrechen durch den sich öffnenden Airbag auch bei einem Öffnungsstoß mit geringstmöglicher Wucht zu gewährleisten. Bei Ausführungen nach dem Stand der Technik hat das zur Folge, dass bei einer Airbagauslösung nur ein sehr begrenzter und vom Szenario weitgehend unabhängiger Energiebetrag durch das Aufbrechen des Innenverkleidungsteils absorbiert werden kann. Bei Szenarien mit einem sich größerer Wucht öffnenden Airbag wird dadurch ein wesentlich geringerer Energiebetrag durch Aufreißen und Aufklappen der Abdeckung absorbiert, als mit Blick auf die Wucht des Öffnungsstoßes wünschenswert wäre.

Dies hat dann wiederum zur Folge, dass eine durch überschüssige Energie verursachte Materialzerstörung am Innenverkleidungsteil und angrenzenden Bauteilen (insbesondere auch an einer Fahrzeugwindschutzscheibe, die sogar dadurch brechen kann) und ein damit verbundener, Fahrzeuginsassen gefährdender Partikelflug kaum oder nur mit hohem Aufwand, wie beispielsweise durch eine aufwendige Verstärkung des Innenverkleidungsteils in Bereichen, die die Durchtrittsöffnung umgeben, zu vermeiden ist. Es ist versucht worden, insbesondere Windschutzscheibenbruch dadurch zu verringern, dass eine Fangband vorgesehen ist, mit dem ein hochschnellender Airbagdeckel rechtzeitig vor dem Auftreffen auf die Windschutzscheibe gestoppt wird. Es hat sich allerdings gezeigt, dass diese bis zur Extremstellung "schlaffen" Bänder während des Explosionsvorganges eine ungehinderte maximale Beschleunigung des Airbagdeckels zulassen, die in der Regel unkontrollierbar ist.

Grundsätzlich kann gesagt sein, dass nach dem Stand der Technik das Öffnungsverhalten einer Airbagklappe/eines Airbagdeckels durch die Art und Intensität der Schwächung der Klappe bzw. des Deckels zu lenken/zu beeinflussen ist. Das notwendige Kraftniveau zur Öffnung des Deckels ist limitiert durch die Materialkennwerte des verwendeten geschwächten Materials.

Die DE 102 46 338 A1, die dem Oberbegriff des Anspruchs 1 entspricht, beschreibt eine Abdeckung für eine Airbageinheit. Um eine Abdeckung für eine unter einer Verkleidung angeordnete Airbageinheit zu schaffen, wird gemäß der DE 102 46 338 A1 vorgeschlagen, dass die Verkleidung auf ihrer dem Fahrzeuginnenraum zugewandten Seite mit einem textilen Flächengebilde überzogen ist, wobei das textile Flächengebilde zumindest im Bereich einer Sollbruchstelle textiles Material mit geringerer Reißfestigkeit aufweist.

Die DE 196 51758 A1 beschreibt ein Fahrzeuginnenverkleidungsbauteil, bei dem ein Körperbereich 11 und ein Abdeckungsbereich 12 einteilig aus einem gestalteten thermoplastischen Harz ausgeformt sind. Der Abdeckungsbereich 12 hat einen Scharnierbereich 15 und eine brechbare Naht 14, die eine Airbagentfaltöffnung bilden, wenn ein Airbag betätigt wird. Einteilig mit dem Abdeckungsbereich ist eine Designschicht 17 ausgeformt, die wenigstens eine äußere Hautlage und eine Sperrlage aufweist. Die Sperrlage ist aus einem Material gebildet, das thermisch mit dem thermoplastischen Harz des Körperbereiches und des Abdeckungsbereiches verschmelzbar ist. Der Scharnierbereich und die brechbare Naht sind durch Ausformen des Abdeckungsbereiches und durch geeignetes Einkerben bis zur und durch die Sperrlage der Designschicht unterschiedlich ausgebildet.

Die japanische Offenlegungsschrift JP 05162603 vom 29. Juni 1993 beschreibt eine Airbagvorrichtung, die zum Ziel hat, dass der eigentliche Airbagbereich und die Umrandung hierzu im Fall einer Öffnung des Airbags gut voneinander trennbar sind.

Der Erfindung liegt die Aufgabe zugrunde, ein Innenverkleidungsteil und eine entsprechende Airbaganordnung zu entwickeln, die einen einfachen und preiswert herzustellenden Aufbau verbindet mit Eigenschaften, die bei einer Airbagauslösung ein unkontrolliertes Aufplatzen sowie eine mit Splitterbildung, Partikelflug und eine Entstehung scharfer Kanten verbundene Materialzerstörung sicher verhindern, und zwar für einen möglichst weiteren Bereich möglicher Energieeinträge durch den sich öffnenden Airbag in der Innenverkleidungsteil, insbesondere soll auch erreicht werden, dass bei Airbaganordnungen, die extrem nah an einer Windschutzscheibe liegen, auch bei mehrstufiger Auslösung kein Windschutzscheibenbruch entsteht.

Diese Aufgabe wird durch ein Innenverkleidungsteil nach Anspruch 1 gelöst.

Erfindungsgemäß ist ein Innenverkleidungsteil zur Abdeckung des Durchtrittsbereichs eines Airbags, enthaltend:
- einen flächigen Träger,
- ein textiles Flächengebilde, das den Durchtrittsbereich zumindest bereichsweise überdeckt, wobei
- das textile Flächengebilde mindestens eine Anfangsschwächung aufweist zum Aufreißen des textilen Flächengebildes entlang einer definierten Aufreißlinie zum Freigeben des Airbags, und
- mindestens eine Richtung der Aufreißlinie entlang einer Vorzugsrichtung des textilen Flächengebildes verläuft, und
- die Weiterreißkraft des textilen Flächengebildes in Vorzugsrichtung niedriger ist als in sämtlichen anderen Richtungen des textilen Flächengebildes vorgesehen,
dadurch gekennzeichnet, dass die maximale Zugfestigkeit des textilen Flächengebildes in Vorzugsrichtung (x-Richtung) zwischen 200 und 4000 N liegt und dass die korrespondierende Reißdehnung des textilen Flächengebildes in Vorzugsrichtung (x-Richtung) zwischen 40 % und 80 % liegt.

Mit dieser Anordnung wird insbesondere die Windschutzscheibenzerstörung bei der Entfaltung eines Airbags vermieden. Dies ist insbesondere wichtig bei Airbaganordnungen, die in eine Instrumententafel integriert sind und bei denen die Airbaganordnung nah an der Windschutzscheibe liegt.

Mit der Erfindung wird insbesondere ein kontrolliertes Reißen mit einer vorbestimmten relevanten Kraft/Kraftniveau erreicht, hierbei wird über die gesamte Dauer des Auslöse-/Aufreißvorgangs die Beschleunigung der herausschnellenden Airbagklappe/Airbagdeckels kontrolliert.

Vorteile sind also ein definiertes Einstellen der Aufreißparameter des Innenverkleidungsteils beim Auslösen des Airbags, insbesondere ein Einstellen einer vorbestimmten Kraft bei einer vorbestimmten Dehnung. Außerdem wird ein genaues Absorbieren der jeweiligen Aufstoßkraft, unabhängig von der Intensität bei mehrstufigen Airbagauslösungen, erreicht.

Insgesamt ist also zu sagen, dass mit der vorliegenden Anwendung ein kontrolliertes Öffnen des Airbags während der gesamten Unfallphase gesichert wird, insbesondere sind hier auch definierte Aufreißlinien garantiert, die sich durch die Vorzugsrichtung des geschwächten textilen Flächengebildes ergeben.

Das Innenverkleidungsteil bietet sich insbesondere zur Anordnung in Kraftfahrzeugen bzw. als Teil einer Instrumententafel an. Es ist allerdings auch möglich, dieses bei Seitenairbags an beliebigen Stellen von Kraftfahrzeugen anzubringen.

Mit "flächigem Träger" ist insbesondere ein formstabiles Element gemeint, das tragende Funktionen (z.B. das Tragen eines Dekors oder auch das Halten einer Airbagvorrichtung) beinhaltet. Ein solcher Träger kann beispielsweise aus einem mit Langglasfaserzuschlag versehenem Polypropylen oder einem beliebigen anderen Kunststoff sein, auch Metall oder Holz sind hier sind hier durchaus möglich.

Das erfindungsgemäße "textile Flächengebilde" überdeckt den Durchtrittsbereich zumindest bereichsweise. Hiermit kann eine vollständige Überdeckung gemeint sein oder auch nur eine sehr geringe Überdeckung. Ferner kann die Überdeckung über ein "Loch" in dem Träger erfolgen oder über einen "geschlossenen" Träger, der somit einen integralen Airbagdeckel aufweist.

Das textile Flächengebilde weist eine "Anfangsschwächung" auf zum Aufreißen des textilen Flächengebildes entlang einer definierten Aufreißlinie zum Freigeben des Airbags. Die "Anfangsschwächung" ist hierbei vorzugsweise als Einschnitt, Laserschwächung, Perforation etc. ausgeführt, soll aber nicht hierauf beschränkt sein.

Die "Aufreißlinie" verläuft entlang einer Vorzugsrichtung des textilen Flächengebildes. Mit "Vorzugsrichtung" ist hier eine Richtung gemeint, in der das Aufreißen definiert erfolgen soll. Hierbei ist die Weiterreißkraft des textilen Flächengebildes in Vorzugsrichtung niedriger als in sämtlichen anderen Richtungen des textilen Flächengebildes. Hiermit wird erzielt, dass das Weiterreißen auch in der definierten Richtung erfolgt und dass hier kein "Ausweichen" zu den Seiten hin etc. gegeben ist, was zu einem "Aufblasen" der Instrumententafel und einer unkontrollierten Weiterzerstörung führen könnte. Das textile Flächengebilde ist hierbei jeweils so an das Innenverkleidungsteils bzw. einen Airbagdeckel bzw. ein Dekor angebunden, dass hiermit nicht nur eine definierte Öffnung des Durchtrittsbereiches erreicht wird, sondern auch durch die Befestigung an anderen Bauteilen ein Wegfliegen dieser anderen Bauteilen ebenfalls verhindert wird.

Vorteilhafte Weiterbildungen der vorliegenden Erfindung werden in den abhängigen Ansprüchen angegeben.

Eine Weiterbildung sieht vor, dass die Weiterreißkraft, ermittelt im Schenkel-Weiterreißversuch nach EN ISO 13937-2 zwischen 40 N und 1.000 N, vorzugsweise zwischen 50 N und 500 N, besonders vorzugsweise zwischen 60 N und 200 N beträgt. Die Probengröße be₋ trug hierbei 150 mm x 50 mm, die Einspannlänge 100 mm, die Vorkraft 2 N und die Prüfgeschwindigkeit 100 mm/min. Hierbei ist bei Anordnungen, bei denen der flächige Träger eine Öffnung im Durchtrittsbereich von vornherein auf die Weiterreißkraft tendenziell geringer anzunehmen (beispielsweise zwischen 40 N und 150 N), während bei "durchgehenden" Trägern die Kräfte höher anzusetzen sind. Hier ist in der Regel aber der Rand des Durchtrittsbereiches durch zusätzliche Schwächungen (beispielsweise Laserperforationen) geschwächt, die Lage der Perforation im flächigen Träger mit der Aufreißlinie des textilen Flächengebildes, das damit verbunden ist, ist entsprechend aufeinander abgestimmt.

Eine andere Weiterbildung sieht vor, dass die Weiterreißkraft in Vorzugsrichtung mindestens 1,5- bis 10-mal, vorzugsweise 3- bis 7-mal kleiner ist als die Einreißkraft in anderen Richtungen des textilen Flächengebildes (vor allem in der hierzu orthogonalen Richtung in der Flächenebene). Auf diese Weise wird sichergestellt, dass selbst bei sehr starken Explosionen ein Reißen stets in Richtung der Vorzugsrichtung erfolgt.

Eine weitere vorteilhafte Ausbildung sieht vor, dass die zugfestigkeit in Vorzugsrichtung größer ist als in anderen Richtungen in der Flächenebene des textilen Flächengebildes. Die Ermittlung erfolgt nach EN ISO 13934-1 mit einer Beispielprobe der Größe 70 mm x 15 mm. Die maximale Zugfestigkeit des textilen Flächengebildes in Vorzugsrichtung kann hierbei zwischen 200 und 4000 N liegen. Für ein erstes Beispielmaterial liegt die maximale Zugfestigkeit in x-Richtung bei 900 - 1100 MPa und in y-Richtung bei 600 MPa, für ein zweites Beispielmaterial in x-Richtung bei 1500 - 1700 MPa und in y-Richtung bei 250 - 350 MPa und für ein drittes Material bei 2000 - 2200 MPa in x-Richtung und 500 MPa in y-Richtung. Hierbei liegt die korrespondierende Reißdehnung des textilen Flächengebildes in Vorzugsrichtung zwischen 50 % und 80 %. Durch diese Einstellung wird gewährleistet, dass stets eine definierte Kraft bei einer gewünschten Elastizität/Dehnung zur Verfügung steht, hierdurch ergibt sich ein kontrollierter Öffnungsvorgang. Für das erste Beispielmaterial liegt die korrespondierende Reißdehnung zu den oben genannten maximalen Zugfestigkeiten bei 50 - 60 % in x-Richtung und 120 - 150 % in y-Richtung; für das zweite Material bei 70 % in x-Richtung und 100 - 130 % in y-Richtung und für das dritte Beispielmaterial bei 60 % in x-Richtung und 100 - 130 % in y-Richtung.

Eine besonders vorteilhafte Weiterbildung sieht vor, dass das textile Flächengebilde ein Gewebe, ein Gewirke oder ein Vlies ist.

Hierbei verläuft die Vorzugsrichtung bei einem Gewebe in Richtung der Kettfäden oder der Schussfäden.

Als textile Flächengebilde bieten sich insbesondere Kunststoffe an, insbesondere Polyestergewebe oder -gewirke. Diese können vorzugsweise ein Flächengewicht von 250 - 600 g/m² (einlagiges Textil) oder 350 - 800 g/m² (Textil mit Sperrfolie) aufweisen. Wird mit dem textilen Flächengebilde der Durchtrittsbereich verdeckt, ist die Sperrfolie vorzugsweise 5 - 15 mm über den Rand überlappend vorzusehen. Das textile Flächengebilde kann ein- oder mehrschichtig sein. Insbesondere bieten sich hier "Abdichtungsfolien" an, die Teil des textilen Flächengebildes sind. Das textile Flächengebilde kann also auch mehrere "homogene" Schichten enthalten, wichtig ist lediglich, dass in der Gesamtheit eine Vorzugsrichtung gegeben ist.

Eine Ausbildung sieht vor, dass der Airbag ein Beifahrerairbag einer Instrumententafel eines Kraftfahrzeuges ist. Hierbei ist es möglich, dass der kleinste Abstand zwischen einem Scharnier der Abdeckung des Durchtrittsbereichs und einer Windschutzscheibe zwischen 30 und 150 mm, vorzugsweise zwischen 40 und 100 mm beträgt.

Das textile Flächengebilde kann gesondert am flächigen Träger befestigt sein, insbesondere durch Nieten oder Schrauben. Es ist allerdings auch möglich, dass dieses beispielsweise festgeschweißt ist am flächigen Träger oder mit diesem verklebt ist.

Die Aufreißlinie des textilen Flächengebildes sollte zumindest bereichsweise parallel zu einem Rand des Durchtrittsbereiches liegen. Es ist möglich, dass das textile Flächengebilde den Durchtrittsbereich vollständig überlappt.

Insbesondere bei der oben genannten Ausführung als Beifahrerairbag einer Instrumententafel liegt die Anfangsschwächung des textilen Flächengebildes vorzugsweise an einer einer Windschutzscheibe eines Kraftfahrzeugs abgewandten Seite des Durchtrittsbereichs. Hierbei wird, wie oben gesagt, die Anfangsschwächung möglicherweise in Form eines Einschnitts des textilen Flächengebildes oder einer anderen Schwächung erreicht. Die Länge des Einschnittes in Vorzugsrichtung kann hierbei mindestens 2 bis 20 mm, vorzugsweise 5 bis 15 mm betragen.

Die Anordnung des textilen Flächengebildes am flächigen Träger kann unterschiedlich ausgeführt sein. Das textilen Flächengebilde kann auf der einem Airbagmodul zugewandten oder abgewandten Seite des flächigen Trägers angeordnet sein.

Hierbei kann das textilen Flächengebilde zumindest bereichsweise in den flächigen Träger eingeschweißt oder eingespritzt sein. Der flächige Träger weist hierbei vorzugsweise ein Scharnier auf zum Öffnen und Halten eines Airbagdeckels, wobei das Scharnier aus einem textilen Material oder einem Metall bestehen kann. Es ist vorteilhaft, dass das Scharnier hier sogar Teil des textilen Flächengebildes ist, es ist jedoch auch möglich, dass es ein unabhängiges Teil darstellt.

Möglich ist auch, dass das textile Flächengebilde auf einer einem Airbagmodul abgewandten Seite des flächigen Trägers angeordnet ist und der flächige Träger im Durchtrittsbereich eine Aussparung aufweist, die durch das textile Flächengebilde überdeckt und das textile Flächengebilde zwischen einer sichtseitigen, vorzugsweise hinterschäumten Dekorschicht und dem flächigen Träger angeordnet ist. Weitere vorteilhafte Weiterbildungen werden in den übrigen abhängigen Ansprüchen beschrieben.

Die Erfindung wird nun anhand mehrerer Figuren erläutert.

Es zeigen:
- Figur 1: eine schematische Draufsicht eines erfingungsgemäßen Innenverkleidungsteils,
- Figur 2: ein Beispiel eines erfindungsgemäßen Innenverkleidungsteils im Querschnitt,
- Figuren 3a und 3b: Ansichten einer weiteren Ausführungsform eines erfindungsgemäßen Innenverkleidungsteils.

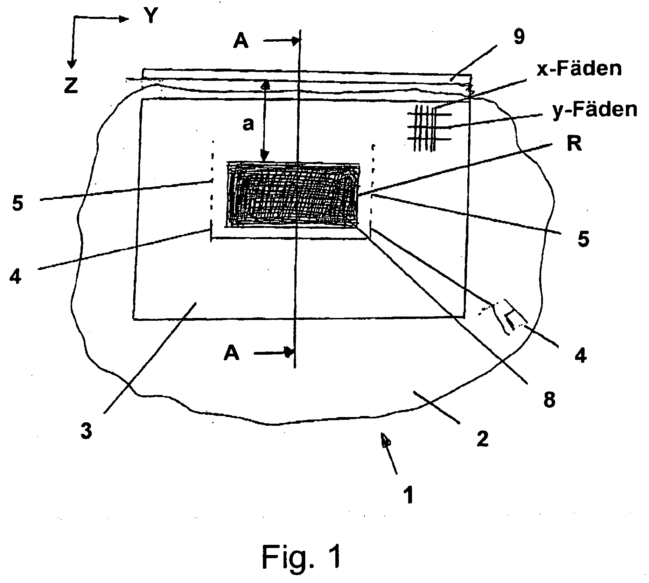

Figur 1 zeigt ein erfindungsgemäßes Innenverkleidungsteil 1. Dieses Innenverkleidungsteil enthält bzw. deckt ab einen Durchtrittsbereich 8. Gezeigt ist flächiger Träger 2 aus Polypropylen mit Langglasfaserzuschlag (PP30LGF), auf den ein textiles Flächengebilde 3 aufgeklebt/aufgeschweißt und stellenweise zusätzlich vernietet ist. Gezeigt ist hierbei eine Draufsicht (der Durchtrittsbereich ist schwarz vollflächig gekennzeichnet, befindet sich allerdings unterhalb des durchgehenden textilen Flächengebildes 3). Das textile Flächengebilde 3 weist eine Anfangsschwächung 4 auf. Diese Anfangsschwächung ist als Einschnitt in das textile Flächengebilde ausgeführt, der weitereinzureißende Einschnitt ist hierbei in x-Richtung orientiert. Insgesamt ist ein durchgehender "U"-förmiger Einschnitt in der textile Flächengebilde gegeben, wobei die Schenkel des "U" eine Anfangsschwächung darstellen. An diese Anfangsschwächung 4 schließt sich dann eine Aufreißlinie 5 an. Diese Aufreißlinie kann eine stellenweise geschwächte Linie sein. Vorzugsweise ist dies jedoch eine ungeschwächte Fortführung der Anfangsschwächung. Die "x"- Richtung ist die "Vorzugsrichtung" des hier dargestellten textilen Flächengebildes. Die Aufreißlinie 5 läuft entlang dieser Vorzugsrichtung, wobei die Weiterreißkraft des textilen Flächengebildes in Vorzugsrichtung "x-Richtung" niedriger ist als in sämtlichen anderen Richtungen des textilen Flächengebildes. Hierdurch wird sichergestellt, dass ein "Weiterreißen" in x-Richtung sicher erfolgt. Dieses "Weiterreißen" erfolgt während des Durchgangs des Airbags und es wird hierbei lediglich so weit aufgerissen, dass die entsprechende Energie des sich entfaltenden Airbags entsprechend aufgenommen wird.

Durch diese kontrollierte Reißkraft bei einer kontrollierten Dehnung wird ein unkontrolliertes "Hochschleudern" des den Durchtrittsbereich bedeckenden Abschnitts des textilen Flächengebildes vermieden und hiedurch auch eine Beschädigung der Windschutzscheibe 9 verhindert.

Die Weiterreißkraft in x-Richtung des ungeschwächten textilen Flächengebildes beträgt, nach Ermittlung im Schenkel-Weiterreißversuch nach EN ISO 13937-2 vorliegend 60 N. Hiermit ist die Weiterreißkraft in Vorzugsrichtung mehr als 1,5 mal größer als in alle andere Richtungen des textilen Flächengebildes, insbesondere als in der zur x-Richtung (Vorzugsrichtung) orthogonalen y-Richtung. Die größte Zugfestigkeit des textilen Flächengebildes beträgt für dieses Beispielmaterial 1600 N in x-Richtung (korrespondierende Reißdehnung 70 %) und 300 N in y-Richtung (korrespondierende Reißdehnung 115 %), ermittelt aus einer Probe 70 mm x 15 mm.

In jeder anderen Richtung als der x-Richtung in der Flächenebene (x-y-Ebene) weist das textile Flächengebilde eine kleinere Zugfestigkeit auf.

Das vorliegende textile Flächengebilde ist ein Gewebe. Hierbei verläuft die Vorzugsrichtung (x-Richtung) in Richtung der Kettfäden oder der Schussfäden des Gewebes.

Das textile Flächengebilde 3 ist vorliegend mehrschichtig, auf eine textile Gewebeschicht ist eine Abdichtungsfolie aufgebracht, die zum textilen Flächengebilde gehört und diesen zum flächigen Träger 2 hin schaumdicht abschließt.

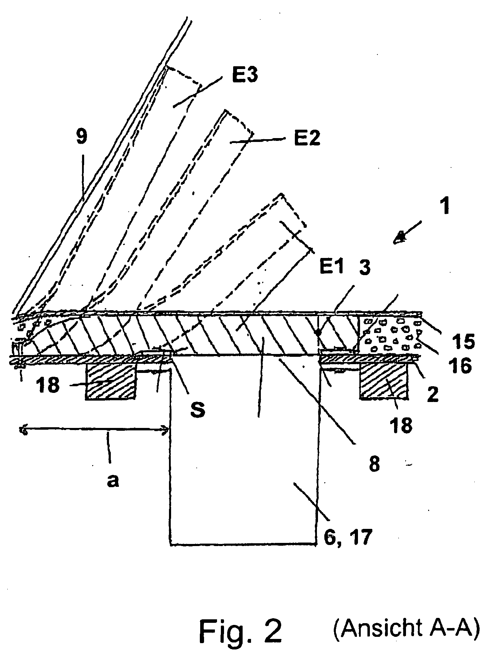

Das vorliegende Innenverkleidungsteil ist Teil einer Instrumententafel im Bereich eines Beifahrerairbags für Kraftfahrzeuge. Der kleinste Abstand (a, s. Fign. 1 und 2) zwischen einem Scharnier des Durchtrittsbereichs und einer Windschutzscheibe beträgt z. B. 70 mm.

Figur 2 zeigt einen Schnitt durch das erfindungsgemäße Innenverkleidungsteil, beispielsweise gemäß A-A aus Fig. 1. Der in Fig. 2 abgebildete Teil der Instrumententafel weist hierbei den flächigen Träger 2 auf, ein durch eine Gießhaut gebildetes Oberflächendekor 15 und eine Zwischenlage 16, der im Wesentlichen aus einem Polyurethanschaum besteht. In der Figur ist auch eine Windschutzscheibe 9 eines Kraftfahrzeugs, in das die Instrumententafel eingebaut ist, zu erkennen. In dem flächigen Träger 2 ist der Durchtrittsbereich 8 (in Fig. 1 schwarz flächig angedeutet) für einen Beifahrerairbag ausgespart. Hinter dem Durchtrittsbereich 8 ist ein Airbagmodul 17 angeordnet, dass an einem Rand R des Durchtrittsbereichs an den Träger zusätzlich angeschraubt/angenietet ist, wozu dort Einlegebleche auf den flächigen Träger 2 aufgelegt sind. Der flächige Träger 2 ist außerdem durch einen den Durchtrittsbereich 8 umgebenden Kunststoffrahmen 18 verstärkt, der von unten an den flächigen Träger 2 abgeschmolzen ist. In die Zwischenlage 16 ist das textile Flächengebilde 3 aus einem Polyamidgewebe eingelegt, das ein Bestandteil der Zwischenlage 16 ist und von dem Polyurethanschaum teilweise bedeckt bzw. durchdrungen ist. Dadurch, dass das textile Flächengebilde 3 den Durchtrittsbereich 8 abdeckt, bekommt die Instrumententafel auch in diesem Bereich (in dem der flächige Träger 2 ausgespart ist) eine ausreichende Formstabilität). Ebenfalls in der Figur gezeigt sind drei Auslösezustände (El, E2, E3), die je nach Stärke eines Airbagschusses sich ergeben. Hierbei ist beim stärksten Schuss (E3) die Windschutzscheibe nicht so tangiert, dass es hier zu einem Windschutzscheibenbruch kommen könnte.

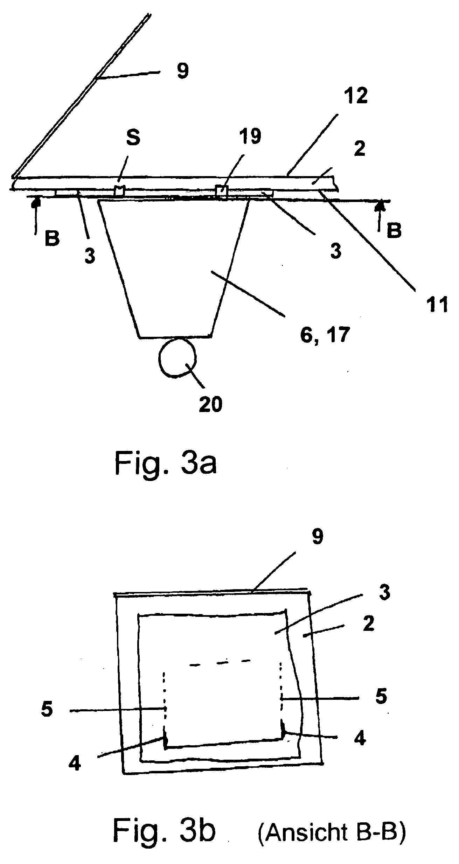

Figuren 3a und 3b zeigen eine alternative Ausführungsform. Hiermit soll gezeigt werden, dass die Erfindung nicht allein auf die Ausführungsform nach Fig. 2 beschränkt ist. Fig. 3a zeigt wiederum eine im Beifahrerbereich geschnittene Instrumententafel mit einer Windschutzscheibe 9. Es handelt sich hierbei um ein kostengünstiges Kraftfahrzeug, bei dem der flächige Träger 2 nicht mit einer Dekorfolie kaschiert ist. Das textile Flächengebilde 3 ist auf der Unterseite des flächigen Trägers 2 angeschweißt. Es ergibt ein Schwächungsbereich 19, der nicht nur in dem textilen Flächengebilde, sondern auch in dem flächigen Träger 2 fortgesetzt ist. Das Airbagmodul 17 ist auf einem Fahrzeugquerträger (cross car beam) 20 abgestützt.

Figur 3b zeigt eine Ansicht B-B aus Fig. 3a. Hier ist wieder die Aufreißlinie 5 erkennbar, die sich an eine Anfangsschwächung 4 anschließt. Im Bereich dieser Aufreißlinie 5 ist das textile Flächengebilde ungeschwächt. Zu sehen ist auch hier die Lage des Scharniers S. Das Scharnier wird hierbei aus dem textilen

Flächengebilde gebildet, das auch die erfindungsgemäßen Weiterreißeigenschaften hat.

Der vorliegende Gegenstand umfasst unter anderem folgende Aspekte:
1. Innenverkleidungsteil (1) zur Abdeckung des Durchtrittsbereichs (8) eines Airbags (6), enthaltend:
   - einen flächigen Träger (2),
   - ein textiles Flächengebilde (3), das den Durchtrittsbereich (8) zumindest bereichsweise überdeckt, wobei
   - das textile Flächengebilde (3) mindestens eine Anfangsschwächung (4) aufweist zum Aufreißen des textilen Flächengebildes entlang einer definierten Aufreißlinie (5) zum Freigeben des Airbags (6), und
   - mindestens eine Richtung der Aufreißlinie (5) entlang einer Vorzugsrichtung (x-Richtung) des textilen Flächengebildes (3) verläuft, und
   - die Weiterreißkraft des textilen Flächengebildes (3) in Vorzugsrichtung (x-Richtung) niedriger ist als in sämtlichen anderen Richtungen des textilen Flächengebildes.
2. Innenverkleidungsteil nach Aspekt 1, dadurch gekennzeichnet, dass die Weiterreißkraft in Vorzugsrichtung (x-Richtung), ermittelt im Schenkel-Weiterreißversuch nach EN ISO 139 37-2, zwischen 40 N und 1000 N, vorzugsweise zwischen 50 N und 500 N, besonders vorzugsweise zwischen 60 N und 200 N beträgt.
3. Innenverkleidungsteil nach einem der vorhergehenden Aspekte, dadurch gekennzeichnet, dass die Weiterreißkraft in Vorzugsrichtung (x-Richtung) mindestens 1,5- bis 10-mal, vorzugsweise 3- bis 7-mal kleiner ist als in anderen Richtungen des textilen Flächengebildes (3) und/oder dadurch gekennzeichnet, dass die Zugfestigkeit in Vorzugsrichtung (x-Richtung) größer ist als in anderen Richtungen in der Flächenebene (x-y-Ebene) des textilen Flächengebildes (3).
4. Innenverkleidungsteil nach einem der vorhergehenden Aspekte, dadurch gekennzeichnet, dass die maximale Zugfestigkeit des textilen Flächengebildes (3) in Vorzugsrichtung (x-Richtung) zwischen 200 und 4000 N liegt.
5. Innenverkleidungsteil nach Aspekt 4, dadurch gekennzeichnet, dass die korrespondierende Reißdehnung des textilen Flächengebildes (3) in Vorzugsrichtung (x-Richtung) zwischen 40 % und 80 % liegt.
6. Innenverkleidungsteil nach einem der vorhergehenden Aspekte, dadurch gekennzeichnet, dass das textile Flächengebilde (3) ein Gewebe ist.
7. Innenverkleidungsteil nach Aspekt 6, dadurch gekennzeichnet, dass die Vorzugsrichtung (x-Richtung) in Richtung der Kettfäden oder der Schussfäden des Gewebes verläuft.
8. Innenverkleidungsteil nach einem der Aspekte 1 bis 5, dadurch gekennzeichnet, dass das textile Flächengebilde (3) ein Vlies oder ein Gewirke ist.
9. Innenverkleidungsteil nach einem der vorhergehenden Aspekte, dadurch gekennzeichnet, dass das textile Flächengebilde (3) ein- oder mehrschichtig ist und/oder dadurch gekennzeichnet, dass das textile Flächengebilde (3) eine Abdichtungsfolie aufweist und/oder dadurch gekennzeichnet, dass der Airbag (6) ein Beifahrerairbag einer Instrumententafel eines Kraftfahrzeugs ist und/oder dadurch gekennzeichnet, dass der kleinste Abstand (a) zwischen einem Scharnier des Durchtrittsbereichs (8) und einer Windschutzscheibe (9) zwischen 30 und 150 mm, vorzugsweise zwischen 40 und 100 mm beträgt und/oder dadurch gekennzeichnet, dass das textile Flächengebilde (3) bereichsweise gesondert am flächigen Träger (2) befestigt ist, insbesondere durch Nieten oder Schrauben und/oder dadurch gekennzeichnet, dass die Aufreißlinie (5) des textilen Flächengebildes (3) zumindest bereichsweise parallel zu einem Rand (R) des Durchtrittsbereichs (8) liegt und/oder dadurch gekennzeichnet, dass das textile Flächengebilde (3) den Durchtrittsbereich (8) vollständig überlappt und/oder dadurch gekennzeichnet, dass die Anfangsschwächung (4) des textilen Flächengebildes (3) an einer einer Windschutzscheibe (9) eines Kraftfahrzeugs abgewandten Seite des Durchtrittsbereichs (8) liegt und/oder dadurch gekennzeichnet, dass die Anfangsschwächung (4) ein Einschnitt des textilen Flächengebildes (3) ist.
10. Innenverkleidungsteil nach Aspekt 9, dadurch gekennzeichnet, dass die Länge des Einschnittes in Vorzugsrichtung (x-Richtung) mindestens 2 bis 20 mm, vorzugsweise 5 bis 15 mm beträgt.
11. Innenverkleidungsteil nach einem der vorhergehenden Aspekte, dadurch gekennzeichnet, dass das textile Flächengebilde (3) auf der einem Airbagmodul (10) zugewandten Seite (12) des flächigen Trägers (2) angeordnet ist.
12. Innenverkleidungsteil nach einem der vorhergehenden Aspekte, dadurch gekennzeichnet, dass das textile Flächengebilde (3) zumindest bereichsweise in den flächigen Träger (2) eingeschweißt oder eingespritzt ist.
13. Innenverkleidungsteil nach einem der vorhergehenden Aspekte, dadurch gekennzeichnet, dass der flächige Träger (2) ein Scharnier (S) aufweist zum Öffnen und Halten eines Airbagdeckels (13).
14. Innenverkleidungsteil nach Aspekt 13, dadurch gekennzeichnet, dass das Scharnier (S) aus einem textilen Material oder einem Metall ist, wobei vorzugsweise das Scharnier (S) Teil des textilen Flächengebildes (3) ist oder ein hiervon unabhängiges Teil darstellt.
15. Innenverkleidungsteil nach einem der Aspekte 1 bis 14, dadurch gekennzeichnet, dass das textile Flächengebilde (3) auf einer einem Airbagmodul (10) abgewandten Seite des flächigen Trägers (2) angeordnet ist und der flächige Träger (2) im Durchtrittsbereich (8) eine Aussparung aufweist, die durch das textile Flächengebilde (3) überdeckt ist und das textile Flächengebilde (3) zwischen einer sichtseitigen, vorzugsweise hinterschäumten, Dekorschicht (14) und dem flächigen Träger (2) angeordnet ist.

## Patentansprüche

1. Innenverkleidungsteil (1) zur Abdeckung des Durchtrittsbereichs (8) eines Airbags (6), enthaltend:
• einen flächigen Träger (2),
• ein textiles Flächengebildet (3), das den Durchtrittsbereich (8) zumindest bereichsweise überdeckt, wobei
• das textile Flächengebilde (3) mindestens eine Anfangsschwächung (4) aufweist zum Aufreißen des textilen Flächengebildes entlang einer definierten Aufreißlinie (5) zum Freigeben des Airbags (6), und
• mindestens eine Richtung der Aufreißlinie (5) entlang einer Vorzugsrichtung (x-Richtung) des textilen Flächengebildes (3) verläuft, und
• die Weiterreißkraft des textilen Flächengebildes (3) in Vorzugsrichtung (x-Richtung) niedriger ist als in sämtlichen anderen Richtungen des textilen Flächengebildes,
**dadurch gekennzeichnet,**
**dass** die maximale Zugfestigkeit des textilen Flächengebildes (3) in Vorzugsrichtung (x-Richtung) zwischen 200 und 4000 N liegt und
**dass** die korrespondierende Reißdehnung des textilen Flächengebildes (3) in Vorzugsrichtung (x-Richtung) zwischen 40 % und 80 % liegt.

2. Innenverkleidungsteil nach Anspruch 1, **dadurch gekennzeichnet, dass** die Weiterreißkraft in Vorzugsrichtung (x-Richtung), ermittelt im Schenkel-Weiterreißversuch nach EN ISO 139 37-2, zwischen 40 N und 1000 N, vorzugsweise zwischen 50 N und 500 N, besonders vorzugsweise zwischen 60 N und 200 N beträgt.

3. Innenverkleidungsteil nach einem der vorhergehenden Ansprüche, **dadurch gekennzeichnet, dass** die Weiterreißkraft in Vorzugsrichtung (x-Richtung) mindestens 1,5- bis 10-mal, vorzugsweise 3- bis 7-mal kleiner ist als in anderen Richtungen des textilen Flächengebildes (3).

4. Innenverkleidungsteil nach einem der vorhergehenden Ansprüche, **dadurch gekennzeichnet, dass** das textile Flächengebilde (3) ein Gewebe ist.

5. Innenverkleidungsteil nach Anspruch 4, **dadurch gekennzeichnet, dass** die Vorzugsrichtung (x-Richtung) in Richtung der Kettfäden oder der Schussfäden des Gewebes verläuft.

6. Innenverkleidungsteil nach einem der Ansprüche 1 bis 3, **dadurch gekennzeichnet, dass** das textile Flächengebilde (3) ein Vlies oder ein Gewirke ist.

7. Innenverkleidungsteil nach einem der vorhergehenden Ansprüche,
**dadurch gekennzeichnet, dass** das textile Flächengebilde (3) ein- oder mehrschichtig ist, und/oder **dadurch gekennzeichnet, dass** die Anfangsschwächung (4) ein Einschnitt des textilen Flächengebildes (3) ist.

8. Innenverkleidungsteil nach Anspruch 7, **dadurch gekennzeichnet, dass** die Länge des Einschnittes in Vorzugsrichtung (x-Richtung) mindestens 2 bis 20 mm, vorzugsweise 5 bis 15 mm beträgt.

9. Innenverkleidungsteil nach einem der vorhergehenden Ansprüche,
**dadurch gekennzeichnet, dass** das textile Flächengebilde (3) auf der einem Airbagmodul (10) zugewandten Seite (12) des flächigen Trägers (2) angeordnet ist.

10. Innenverkleidungsteil nach einem der vorhergehenden Ansprüche,
**dadurch gekennzeichnet, dass** das textile Flächengebilde (3) zumindest bereichsweise in den flächigen Träger (2) eingeschweißt oder eingespritzt ist.

11. Innenverkleidungsteil nach einem der vorhergehenden Ansprüche, **dadurch gekennzeichnet, dass** der flächige Träger (2) ein Scharnier (S) aufweist zum Öffnen und Halten eines Airbagdeckels (13).

12. Innenverkleidungsteil nach Anspruch 11, **dadurch gekennzeichnet, dass** das Scharnier (S) aus einem textilen Material oder einem Metall ist, wobei vorzugsweise das Scharnier (S) Teil des textilen Flächengebildes (3) ist oder ein hiervon unabhängiges Teil darstellt.

13. Innenverkleidungsteil nach einem der Ansprüche 1 bis 12, **dadurch gekennzeichnet, dass** das textile Flächengebilde (3) auf einer einem Airbagmodul (10) abgewandten Seite des flächigen Trägers (2) angeordnet ist und der flächige Träger (2) im Durchtrittsbereich (8) eine Aussparung aufweist, die durch das textile Flächengebilde (3) überdeckt ist und das textile Flächengebilde (3) zwischen einer sichtseitigen, vorzugsweise hinterschäumten, Dekorschicht (14) und dem flächigen Träger (2) angeordnet ist.

## Claims

1. An inner trim part (1) for covering the passage region (8) of an airbag (6) containing:
• a two-dimensional carrier (2),
• a textile sheet formation (3) which at least in regions covers the passage region (8), wherein
• the textile sheet formation (3) comprises at least one initial weakening (4) for tearing open the sheet formation along a defined tear-open line (5) for releasing the airbag (6), and
• at least one direction of the tear-open line (5) runs along a preferred direction (x-direction) of the textile sheet formation (3), and
• the tear propagation force of the textile sheet formation (3) in the preferred direction (x-direction) is lower than in all other directions of the textile sheet formation,
**characterised in that**
the maximal tensile strength of the textile sheet formation (3) in the preferred direction (x-direction) lies between 200 and 4000 N and that the corresponding elongation at break of the textile sheet formation (3) in the preferred direction (x-direction) lies between 40 % and 80 %.

2. An inner trim part according to claim 1, **characterised in that** the tear propagation force in the preferred direction (x-direction), determined in the trouser tear propagation test according to EN ISO 139 37-2 is between 40 N and 1000 N, preferably between 50 N and 500 N, particularly preferably between 60 N and 200 N.

3. An inner trim part according to one of the preceding claims, **characterised in that** the tear propagation force in the preferred direction (x-direction) is at least 1.5 to 10 times, preferably 3 to 7 times smaller than in other directions of the textile sheet formation (3).

4. An inner trim part according to one of the preceding claims, **characterised in that** the textile sheet formation (3) is a woven fabric.

5. An inner trim part according to claim 4, **characterised in that** the preferred direction (x-direction) runs in the direction of the warp threads or the weft threads of the woven fabric.

6. An inner trim part according to one of the claims 1 to 3, **characterised in that** the textile sheet formation (3) is a non-woven or a knitted fabric.

7. An inner trim part according to one of the preceding claims, **characterised in that** the textile sheet formation (3) is single-layered or multi-layered and/or **characterised in that** the initial weakening (4) is an incision of the textile sheet formation (3).

8. An inner trim part according to claim 7, **characterised in that** the length of the incision in the preferred direction (x-direction) is at least 2 to 20 mm, preferably 5 to 15 mm.

9. An inner trim part according to one of the preceding claims, **characterised in that** the textile sheet formation (3) is arranged on the side (12) of the two-dimensional carrier (2) which faces an airbag module (10).

10. An inner trim part according to one of the preceding claims, **characterised in that** the textile sheet formation (3) at least in regions is welded or injected into the two-dimensional carrier (2).

11. An inner trim part according to one of the preceding claims, **characterised in that** the two-dimensional carrier (2) comprises a hinge (S) for opening and holding an airbag cover (13).

12. An inner trim part according to claim 11, **characterised in that** the hinge (S) is of a textile material or a metal, wherein preferably the hinge (S) is part of the textile sheet formation (3) or represents a part which is independent of this.

13. An inner trim part according to one of the claims 1 to 12, **characterised in that** the textile sheet formation (3) is arranged on a side of the two-dimensional carrier (2) which is away from an airbag module (10), and the two-dimensional carrier (2) in the passage region (8) comprises a recess which is covered by the textile sheet formation (3), and the textile sheet formation (3) is arranged between a viewed-side, preferably back-foamed decor layer (14) and the two-dimensional carrier (2).

## Revendications

1. Pièce d'habillage intérieur (1) destinée à recouvrir la zone de passage (8) d'un airbag (6), comprenant :
un support plat (2),
une structure de surface textile (3) qui recouvre la zone de passage (8) au moins par endroits :
la structure de surface textile (3) présentant au moins un affaiblissement initial (4) destiné à déchirer la structure de surface textile le long d'une ligne de déchirure définie (5) afin de laisser passer l'airbag (6), et
au moins un sens de la ligne de déchirure (5) s'étendant le long d'une direction préférentielle (axe x) de la structure de surface textile (3), et
la force de propagation de la déchirure de la structure de surface textile (3) étant plus faible dans la direction préférentielle (axe x) que dans toutes les autres directions de la structure de surface textile,
**caractérisée en ce que** la résistance à la traction maximale de la structure de surface textile (3) dans la direction préférentielle (axe x) est comprise entre 200 et 4000 N et **en ce que** l'allongement à la rupture correspondant de la structure de surface textile (3) dans la direction préférentielle (axe x) est compris entre 40 % et 80 %.

2. Pièce d'habillage intérieur selon la revendication 1, **caractérisée en ce que** la force de propagation de la déchirure dans la direction préférentielle (axe x), déterminée selon la méthode des éprouvettes pantalon selon la norme EN ISO 139 37-2, est comprise entre 40 N et 1000 N, de préférence entre 50 N et 500 N, et de manière particulièrement préférée entre 60 N et 200 N.

3. Pièce d'habillage intérieur selon l'une quelconque des revendications précédentes, **caractérisée en ce que** la force de propagation de la déchirure dans la direction préférentielle (axe x) est au moins 1,5 à 10 fois, de préférence 3 à 7 fois plus faible que dans les autres directions de la structure de surface textile (3).

4. Pièce d'habillage intérieur selon l'une quelconque des revendications précédentes, **caractérisée en ce que** la structure de surface textile (3) est un tissu.

5. Pièce d'habillage intérieur selon la revendication 4, **caractérisée en ce que** la direction préférentielle (axe x) s'étend dans le sens des fils de chaîne ou des fils de trame du tissu.

6. Pièce d'habillage intérieur selon l'une quelconque des revendications 1 à 3, **caractérisée en ce que** la structure de surface textile (3) est un non-tissé ou un tissu à mailles.

7. Pièce d'habillage intérieur selon l'une quelconque des revendications précédentes, **caractérisée en ce que** la structure de surface textile (3) comprend une ou plusieurs couches et/ou **caractérisée en ce que** l'affaiblissement initial (4) est une coupure de la structure de surface textile (3).

8. Pièce d'habillage intérieur selon la revendication 7, **caractérisée en ce que** la longueur de la coupure dans la direction préférentielle (axe x) va d'au moins de 2 à 20 mm, et de préférence de 5 à 15 mm.

9. Pièce d'habillage intérieur selon l'une des revendications précédentes, **caractérisée en ce que** la structure de surface textile (3) est agencée sur le côté (12) du support plat (2) orienté vers un module d'airbag (10).

10. Pièce d'habillage intérieur selon l'une quelconque des revendications précédentes, **caractérisée en ce que** la structure de surface textile (3) est soudée ou injectée au moins par endroits dans le support plat (2).

11. Pièce d'habillage intérieur selon l'une quelconque des revendications précédentes, **caractérisée en ce que** le support plat (2) présente une charnière (S) permettant d'ouvrir et de maintenir le couvercle d'un airbag (13).

12. Pièce d'habillage intérieur selon la revendication 11, **caractérisée en ce que** la charnière (S) est fabriquée dans un matériau textile ou un métal, de préférence, la charnière (S) étant une partie de la structure de surface textile (3) ou représentant une pièce indépendante de celle-ci.

13. Pièce d'habillage intérieur selon l'une quelconque des revendications 1 à 12, **caractérisée en ce que** la structure de surface textile (3) est agencée sur un côté du support plat (2) opposé à un module d'airbag (10) et le support plat (2) présente, dans la zone de passage (8), un évidement qui est recouvert par la structure de surface textile (3) et la structure de surface textile (3) est agencée entre une couche décorative (14), de préférence garni de mousse, du côté visible et le support plat (2).
